# EUROPÄISCHE PATENTANMELDUNG

(11) **EP 0 667 474 A1**
(43) Veröffentlichungstag der Anmeldung: **16.08.1995**
(21) Anmeldenummer: 94810742.0
(22) Anmeldetag: 21.12.1994
(51) Int. Cl.: F16L 3/123, F16L 55/172

(54) **Rohrschelle mit elastischer Einlage**

(30) Priorität: 10.02.1994 DE 4404179
(71) Anmelder: HILTI Aktiengesellschaft, FL-9494 Schaan (LI)
(72) Erfinder: Enzenhofer, Martin, A-6805 Gisingen (AT)
(74) Vertreter: Wildi, Roland

(57) **Zusammenfassung**

Die Rohrschelle für die Halterung von Bauteilen, insbesondere von Rohren (5), besitzt eine im wesentliche U-förmig ausgebildete, elastische Einlage (2), wobei die dem Bauteil zugewandte Seite der Einlage (2) zur Reibungsminderung wenigstens teilweise mit einer reibungsmindernden Beschichtung (7) in Form eines Lackes versehen ist.

## Beschreibung

Die Erfindung betrifft eine Rohrschelle für die Halterung von Bauteilen mit wenigstens einem Bügel und einer zwischen Bauteil und Bügel angeordneten elastischen Einlage, wobei die dem Bauteil zugewandte Seite der elastischen Einlage wenigstens teilweise eine reibungsmindernde Oberfläche aufweist.

Zur Befestigung von Bauteilen, insbesondere von Rohren, werden Rohrschellen verwendet. Medien, die in Rohren transportiert werden, bzw. Gegenstände, die in Bauteilen gehalten werden, können bei thermischen Schwankungen eine Längenänderungen der Rohre bzw. Bauteile bewirken. Auch bei der Montage der Rohre und Bauteile ist es oft notwendig, diese in ihren Längsrichtungen zu bewegen. Um die Bewegung der Bauteile, insbesondere von Rohren, an den entsprechenden Befestigungspunkten ermöglichen zu können, ist bereits eine Rohrschelle aus der EU-PS 0 413 883 bekannt, deren elastische Einlage aus einem Basisbereich und zwei Seitenbereichen besteht. Der an den Rohren zur Anlage gelangende Basisbereich weist eine reibungsmindernde Oberfläche auf. Dies wird durch unterschiedlich harte Materialien erreicht, indem im Gegensatz zum Basisbereich die Seitenbereiche der Einlage aus einem Material grösserer Härte hergestellt sind. Die Herstellung einer derartigen Einlage mit unterschiedlich harten Materialien ist teuer und schwierig.

Der Erfindung liegt die Aufgabe zugrunde, eine wirtschaftlich und einfach herstellbare Einlage für Rohrschellen zu schaffen, die gute Gleiteigenschaften aufweist.

Erfindungsgemäss wird die Aufgabe dadurch gelöst, dass die reibungsmindernde Oberfläche von einer Beschichtung aus Lack gebildet ist.

Da Lacke eine besonders gute, reibungsmindernde Eigenschaft aufweisen, kann die elastische Einlage aus einem Material einheitlicher Härte bestehen. Lacke lassen sich durch Aufsprühen, Aufrollen oder Eintauchen einfach und schnell auf elastische Einlagen aufbringen. Es ist somit eine wirtschaftliche Herstellung elastischer Einlagen mit reibungsmindernder Oberfläche möglich.

Zweckmässigerweise besteht der Lack aus einem Fluorkohlenwasserstoff, insbesondere Polytetrafluoräthylen. Geräusche, die beim Verschieben der Bauteile in der Rohrschelle entstehen, werden durch diesen besonderen Werkstoff fast zur Gänze gedämmt. Durch die Aufbringung des Lackes liegen die Bauteile nicht mehr direkt auf der elastischen Einlage der Rohrschelle. Die Aufbringung des Lackes auf die elastische Einlage kann beispielsweise mit einem wässrigen System erfolgen.

Von der Form des Basisbereiches und von der Härte sowie von der Oberflächenrauhigkeit des Materials der elastischen Einlage hängt es ab, wie gross die Stärke des Lackes sein muss. Die Stärke des Lackes beträgt vorteilhafterweise 0,01 bis 0,1 mm.

Da bei der Befestigung von Bauteilen bzw. Rohren mit entsprechenden Belastungen auf die Einlage zu rechnen ist, ist es notwendig, dass der Lack einen kleinen Reibungskoeffizienten besitzt. Der Reibungskoeffizient beträgt zweckmässigerweise 0,03 bis 0,09.

Bei der Befestigung von kleinen Bauteilen bzw. von Bauteilen mit geringem Gewicht können die mit dem Lack versehenen Bereiche der elastischen Einlage vorzugsweise als Vorsprünge ausgebildet sein. Speziell bei der Ausrichtung von Rohren in deren Längsrichtung ist dies von Vorteil, da durch die geringere Berührungsfläche zwischen den Rohren und der Einlage die Verschiebung der Rohre in der Rohrschelle zusätzlich erleichtert wird. Speziell bei elastischen Einlagen in Rohrschellen, die ein Rohr entlang des gesamten Umfanges umgreifen, ist es zweckmässig, wenn die Vorsprünge als parallel zur Längserstreckung der Einlage vertaufende Rippen ausgebildet sind. Auf diese Weise wird eine bessere Zentrierung der festzulegenden Bauteile gewährleistet und eine gute gleitende Bewegung des Bauteiles innerhalb der Rohrschelle ermöglicht.

Die Erfindung wird nachstehend anhand von Zeichnungen, die ein Ausführungsbeispiel wiedergeben, näher erläutert. Es zeigen:
Fig. 1 eine ein Rohr umgebende Rohrschelle;
Fig. 2 einen Schritt 11-11 durch die Rohrschelle gemäss Fig. 1;
Fig. 3 eine Detailvergrösserung des Ausschnittes 111 in Fig. 2.

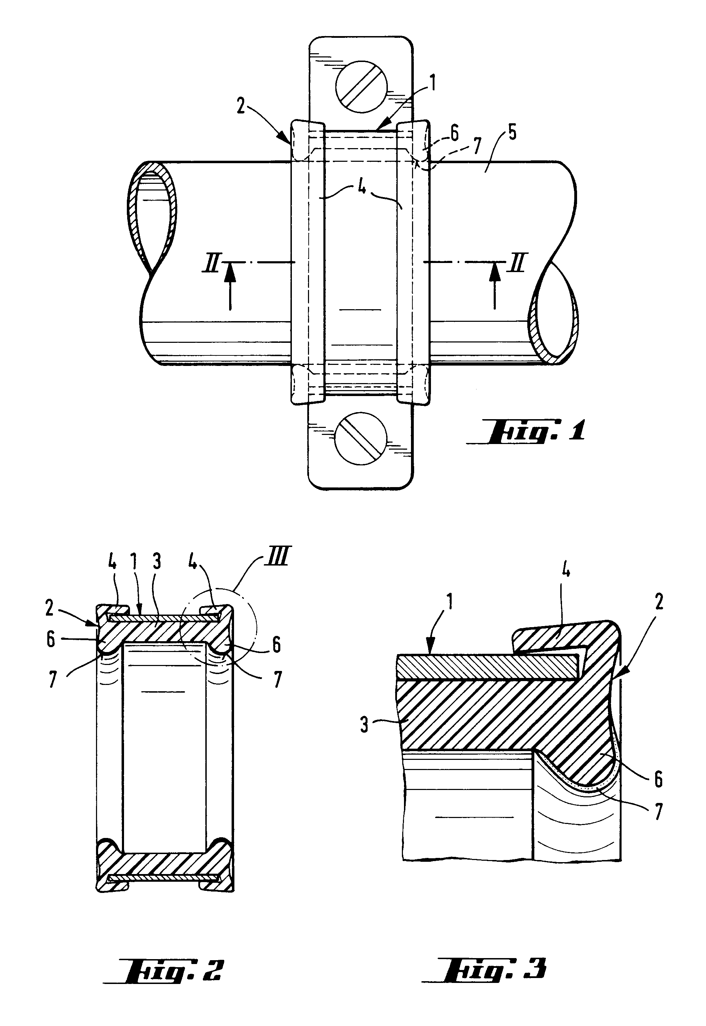

Die Fig. 1 zeigt eine Rohrschelle mit Bügel 1 und elastischer Einlage 2. Die Einlage 2 umgreift mit einem Basisbereich 3 und mit den Seitenbereichen 4 die Rohrschelle 1 teilweise und liegt an der Aussenfläche eines als Rohr 5 ausgebildeten Bauteiles an.

Durch die in den Fig. 2 und 3 gezeigten rippenförmigen Vorsprünge 6 der Einlage 2 mit halbkreisförmigem Querschnitt wird zwischen der Aussenfläche des Rohres 5 und der Einlage 2 jeweils nur eine Linienauflage bzw. Linienberührung geschaffen. Die Vorsprünge 6 tragen eine Beschichtung 7, die aus einem Lack aus einem Fluorkohlenwasserstoff, insbesondere Polytetrafluoräthylen, besteht. Durch die Linienauflage wird eine zusätzliche Reduzierung der Reibung des Rohres 5 gegenüber der Einlage 2 erzielt und ein einwandfreies Anliegen der Einlage 2 an allfälligen Unebenheiten des Rohres 5 erreicht.

Die rippenförmigen Vorsprünge 6 vertaufen parallel zur Längserstreckung der elastischen Einlage 2. Die Rohrschelle 1 kann einen oder mehrere Bügel 1 aufweisen und die Einlage 2 kann ein-oder mehrteilig ausgebildet sein. Auch können die Bügel 1 aus verschiedenen Materialien, insbesondere aber aus Stahlblech, bestehen.

## Patentansprüche

1. Rohrschelle für die Halterung von Bauteilen mit wenigstens einem Bügel (1) und einer zwischen Bauteil und Bügel (1) angeordneten elastischen Einlage (2), wobei die dem Bauteil zugewandte Seite der elastischen Einlage (2) wenigstens teilweise eine reibungsmindernde Oberfläche aufweist, dadurch gekennzeichnet, dass die reibungsmindernde Oberfläche von einer Beschichtung (7) aus Lack gebildet ist.

2. Rohrschelle nach Anspruch 1, dadurch gekennzeichnet, dass der Lack aus einem Fluorkohlenwasserstoff, insbesondere Polytetrafluoräthylen, besteht.

3. Rohrschelle nach Anspruch 1 oder 2, dadurch gekennzeichnet, dass der Lack eine Stärke von 0,01 bis 0,1 mm aufweist.

4. Rohrschelle nach einem der Ansprüche 1 bis 3, dadurch gekennzeichnet, dass der Lack einen Reibungskoeffizienten von 0,03 bis 0,09 aufweist.

5. Rohrschelle nach einem der Ansprüche 1 bis 4, dadurch gekennzeichnet, dass die mit dem Lack versehenen Bereiche der elastischen Einlage (2) als Vorsprünge (6) ausgebildet sind.

6. Rohrschelle nach Anspruch 5, dadurch gekennzeichnet, dass die Vorsprünge (6) als parallel zur Längserstreckung der Einlage (2) verlaufende Rippen ausgebildet sind.
